Europäisches Patentamt

European Patent Office

Office européen des brevets

(11) Publication number: 0 510 863 A2

# EUROPEAN PATENT APPLICATION

(21) Application number: 92303325.2

(22) Date of filing: 14.04.92

(51) Int. Cl.5: **A47J 27/21**, H05B 1/02, F24H 1/20

(30) Priority: 22.04.91 GB 9108597

(43) Date of publication of application:
28.10.92 Bulletin 92/44

(84) Designated Contracting States:
DE DK FR GB NL SE

(71) Applicant: OTTER CONTROLS LIMITED
Hardwick Square South
Buxton, Derbyshire SK17 6LA(GB)

(72) Inventor: O'Neill, Robert Andrew
"Morcot", Alexandra Road
Buxton, Derbyshire SK17 9NO(GB)
Inventor: Gaeta, Antonio Martin
70 Kings Road
Fairfield, Buxton, Derbyshire(GB)
Inventor: Waggott, Alan
77 Rockfield Road
Buxton, Derbyshire SK17 7LE(GB)
Inventor: White, Ian
"Tarronthorp", 82 Oueens Road
Fairfield, Buxton, Derbyshire(GB)

(74) Representative: Milhench, Howard Leslie et al
R.G.C. Jenkins & Co. 26 Caxton Street
London SW1H 0RJ(GB)

(54) Controls for water heating appliances.

(57) An electrically heated water boiling appliance is arranged to be capable of selectively providing boiling water and water at a predetermined lower temperature (suitable for example for making coffee). The appliance has a first thermally-responsive switch which is arranged to be exposed to steam generated when water boils in the appliance so as to cut off the supply of electrical energy to the heating element of the appliance, a second thermally-responsive switch connected in series with the first switch and arranged to cut off the supply to the heating element at a predetermined lower temperature, and a manually-operable selector switch for taking the second switch out of circuit when it is required to boil water in the appliance. The first, steam sensitive switch and the selector switch can conveniently be formed as a unitary switch structure in which a bimetal moves a trip lever to determine the condition of a first pair of switch contacts, and a third switch contact is provided which co-operates with one of the first pair of switch contacts to define the selector switch, a manually operable lever being movable interactively with the trip lever to determine the state of the selector switch. The appliance also has an element protection control for cutting off the supply to the heating element in a sensed element overtemperature condition.

EP 0 510 863 A2

## Field of the Invention:

This invention relates generally to controls for water heating appliances, particularly though not exclusively hot water jugs or kettles, and also to appliances incorporating such controls.

## Background of the Invention:

Controls for water heating appliances are well known which operate to disconnect an electrically powered heating element of the appliance from the electricity supply in the event of an overtemperature condition arising, for example because of the appliance having been switched on dry or having been allowed to boil dry; such controls will hereinafter be referred to as element protectors. An exemplary element protector marketed by Otter Controls Ltd of Buxton, Derbyshire, England is the X1 or Gemini element protector which is generally as described in GB 2194099 with reference to Figs. 3A, 3B and 3C of the drawings thereof. The X1 element protector provides primary and secondary levels of protection, a bimetal mounted in a collapsible carrier being responsive to an overtemperature condition arising at the heating element of a water heating vessel to open a pair of switching contacts via a push-rod, and the carrier being arranged to collapse and thereby open a further pair of contacts to provide a secondary level of protection operative at a higher temperature in the event of failure of the primary protection provided by the bimetal.

It is also well known to provide a water heating vessel, particularly a hot water jug or kettle, with a control adapted to switch off the supply of electricity to the electric heating element of the vessel when water boils in the vessel. Such controls commonly operate by sensing the generation of steam within the vessel and commonly include a bimetal arranged to be exposed to the steam and in response thereto to open a pair of switching contacts. One such steam control also marketed by Otter Controls Ltd and adapted to be used in conjunction with the abovementioned X1 control to provide element protection and automatic operation in an electrically powered water boiling vessel is the J1 control which is substantially as described in GB 2212664 with reference to Figs. 9A and 9B of the drawings thereof. The J1 steam control comprises a plastics moulding defining spaced-apart abutments which are bridged by a sprung overcentre arrangement comprising a bimetal and a trip lever and further defining a compartment within which there is mounted a switch sub-assembly arranged to be operated by the movements of the trip lever. As is described in GB 2212664 the J1 steam control can be plugged into an opening in the top of the X1 element protector so as to connect the switch of the J1 into the electric circuit supplying the vessel heating element through the X1, and can alternatively be coupled thereto by use of appropriate connectors at the ends of an elongate conductor lead.

The above described and other element protectors and steam controls enable an automatic water boiling vessel having full element overtemperature protection to be provided, the vessel switching off when water boils in the vessel and steam is generated. Water boiling vessels are suitable for making tea, but it is thought by some that coffee, particularly instant coffee, is best prepared with water at a temperature of about 85°C in order to preserve the full flavour of the drink. It is possible furthermore that other beverages and convenience foods may benefit from preparation with water which is somewhat lower in temperature than boiling point. However it is clearly desirable that one and the same appliance should be capable of producing boiling water, for example for the making of tea, and should also be capable of producing water at a somewhat reduced temperature, for example at 85°C for the making of coffee. An electronic control capable of achieving these functions is described in GB 2228634 and the present invention provides an alternative mechanical or electromechanical control for an electrically powered water heating appliance which can selectively provide either boiling water suitable for making tea or water at a reduced temperature suitable for the preparation of coffee and other convenience foods and beverages.

A water heating appliance capable of selectively providing boiling water and water at a reduced temperature (85°C for example) could possibly incorporate a temperature - responsive switch actuator arranged so that in one selectable condition of the appliance the actuator will respond to the water temperature in the appliance reaching a predetermined temperature lower than 100°C, and in another selectable condition of the appliance the actuator will respond to the generation of steam by water boiling in the appliance. Such an arrangement would have the advantage that one and the same temperature-responsive actuator would be utilized for achieving both water heating functions, and might be achieved, for example, by use of a device such as the aforementioned J1 steam control wherein the temperature setting of the bimetal blade is about 85°C and providing movable steam ducting and/or baffling so as to enable the heat transfer characteristic between the water in the appliance and the bimetal blade to be selectable so that in one condition of the ducting/baffling the bimetal is directly responsive to the water temperature and in another condition the bimetal is responsive to steam generation. The use of such movable steam ducting and/or baffling is however not preferred on account of its relative complexity.

Objects and Summary of the Invention:

It is therefore the object of the present invention to provide a water heating appliance capable of selectively providing boiling water and water at a reduced temperature (85°C for example) in a simple and cost effective manner and accordingly, in one of its aspects the present invention provides such a water heating appliance which comprises a steam sensor or boiling control and a further control adapted to be responsive to the water temperature in the appliance reaching a predetermined temperature lower than 100°C, the appliance further comprising a manually-operable selector arranged to disable the operation of the further control when it is desired to boil water in the appliance. Where an element protector is additionally provided, the steam control and the further control can conveniently be connected electrically in series with the element protector and the selector can be arranged to operate a switch connected across the further control; by virtue of such an arrangement the further control will be rendered operative when the switch is open circuit and will be inoperative when short-circuited by the closed switch, and when the further control is operative so that the heating element of the appliance will be switched off when the water temperature in the appliance reaches, say, 85°C the steam control will remain in circuit so as to perform a back-up or secondary protective function in the event of failure of the further control.

According to yet another aspect of the present invention, therefore, a steam control, or other control adapted to switch off the power supply to an electrically heated appliance in the event of water boiling in the appliance, further comprises a manually-operable selector movable between "hot water" and "boiling water" positions and a switch operable by said selector for bypassing a "hot water" sensor coupled to the steam control when the selector is in its "boiling water" position.

Element protectors and steam controls are conventionally such that they do not automatically reset when the temperature falls as the element and the water cools following switching off of the element by the respective control. Element protectors are thus arranged for safety reasons so that an appliance is not switched back on in circumstances which might potentially be hazardous. The steam control could be arranged to reset automatically, but this could lead to a potentially hazardous situation if an appliance were to be left unattended, and therefore such an automatically resetting steam control arrangement is not preferred. The further control provided for switching off the heating element at a water temperature of, say, 85°C will however preferably be arranged to reset automatically so that the control will cycle and thereby maintain the water at the required temperature, though it could alternatively be arranged to be manually reset.

The steam control, the further control and the element protector may all utilize bimetallic temperature-responsive switch actuators and in the following there will be described an exemplary embodiment of the invention wherein a modified form of the aforementioned J1 steam control incorporates a switch, additional to the switch normally provided therein, which constitutes the aforementioned switch connected across the further control, the aforementioned selector is coupled to the trip lever of the J1 control, and a separate thermally-responsive bimetallic switch constitutes the aforementioned further control. Alternatively the further control can comprise a positive temperature coefficient of resistance (PTCR) device arranged either to carry and effectively switch-off the power supply to the appliance heating element or to operate through a relay.

The above and further features of the present invention, together with advantages thereof, will be further explained in the following detailed description given with reference to the accompanying drawings.

Brief Description of the Drawings:

Fig. 1 is a schematic circuit diagram illustrating the interconnections between an element protector, a steam control and a further control as aforesaid in an exemplary appliance according to the present invention;

Fig. 2 is a schematic circuit diagram of an alternative embodiment which utilizes a PTCR device in the further control;

Fig.3 is an exploded view of a modified form of the aforementioned J1 control which can be used in an appliance according to the present invention;

Figs. 4A, 4B and 4C show the control of Fig. 3 in different operative conditions; and

Figs. 5A, 5B and 5C are side views of the control of Fig. 3 showing the function of the linkage provided between the selector and the additional switch incorporated therein; and

Fig. 6 shows an arrangement according to the circuit diagram of Fig. 1 employing an X1 element protector, a modified J1 steam control and a G6 switch all as manufactured by Otter Controls Limited.

## Detailed Description of the Embodiments:

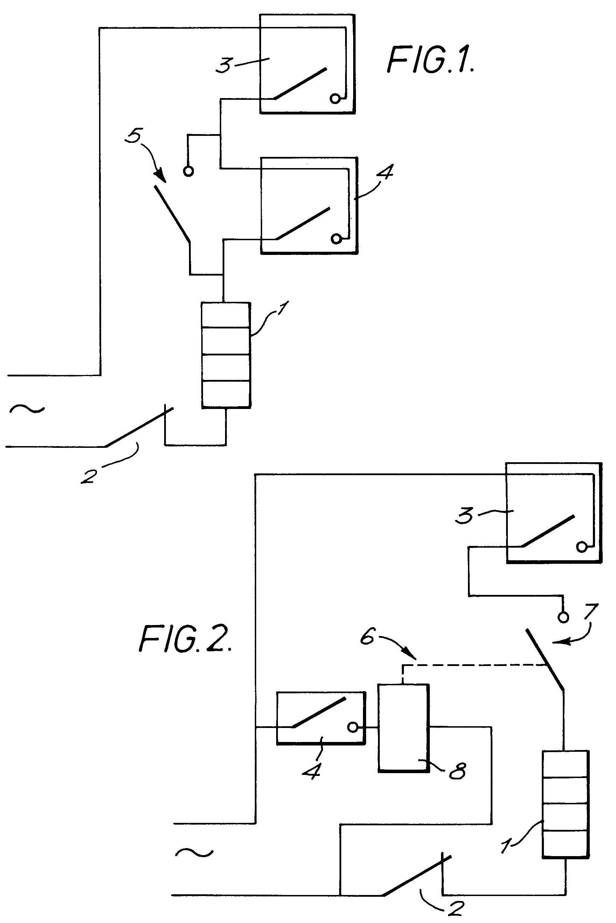

Referring to Fig. 1, there is schematically illustrated therein the electrical circuit of an electrically heated water heating appliance in accordance with one embodiment of the present invention. The electrically powered heating element 1 of the appliance is shown connected in series with a schematically illustrated element protector 2 and steam control 3, the element protector for example being an X1 device as aforementioned and the steam control for example being a J1 device as aforementioned. In accordance with the present invention, a further control 4 is provided in the circuit and a manually operable switch 5 enables the further control 4 to be bypassed. The steam control 3 is arranged to be responsive to the generation of steam when water boils in the appliance and the further control 4 is arranged to be directly responsive to the temperature of water in the appliance and to go open circuit when a temperature of, say 85°C is reached. The switch 5 enables the further control 5 to be taken out of the circuit when it is required to boil water in the appliance. The steam control 3 will not normally respond when the further control 4 is switched into the circuit since insufficient steam will be generated to cause its operation, but it provides a back-up against failure of the further control 4 to operate.

Fig. 2 shows an alternative arrangement wherein the further control 4 comprises a PTCR device. In the arrangement shown the PTCR device 4 (schematically shown as a switch) is connected to an electromagnetic relay 6 such that in the low temperature, low resistance (closed) condition of the PTCR the heating element current flows mainly through the relay contacts 7 and there is a small additional current through the PTCR and the relay coil 8 to hold closed the switching contacts 7 of the relay. When the PTCR device reaches, say, 85°C its resistance exhibits a pronounced increase such as to dramatically reduce the current flow through the relay coil 8. This reduction in current flow through the relay coil 8, causes relay 6 to drop out, thereby causing relay contacts 7 to open and open circuiting the heating element 1. As with the arrangement of Fig. 1, in the event of failure of the PTCR control 4, the steam control 3 will operate to switch off heating element 1 when water boils in the appliance. The relay 6 could be dispensed with by use of a PTCR device capable of carrying and switching the full current through the heating element. In either case the temperature of the PTCR device would, to a lesser or greater extent, be dependent upon current flow therethrough and this would have to be taken into consideration in setting the temperature at which the further control comprised by the PTCR device was required to operate. The switch 5 provided in the embodiment of Fig. 1 is not shown in the arrangement of Fig. 2, but a corresponding switch arrangement will be provided to enable water to be heated to boiling. In the arrangement shown in Fig. 2 this could simply comprise a manually operable switch connected across the relay contacts 7.

Both in the arrangement of Fig. 1 and in the arrangement of Fig. 2, the further control 4 could be arranged to be automatically resetting so that it will cycle and reconnect the heating element 1 to the power supply from time to time so as to keep the water in the appliance generally at its required temperature.

Alternatively, in either case, the further control 4 could be such as to require manual resetting once it has operated, for example by use of a bistable bimetallic element in the further control in the arrangement of Fig. 1, or by provision of a further set of relay contacts in series with the relay coil in the arrangement of Fig. 2. In our International Patent Application No. WO 91/19311 there is described a method of operating a thermostatic bimetallic switch to obtain a relatively fine control of the temperature of an associated volume of water and such method, utilizing an automatically recycling bimetallic switch for example as described in our British Patent Application No. 9027733.6 (GB 2239987), is advantageously applicable to an automatically resetting embodiment of the present invention. In such an embodiment the water in the appliance would approach the lower operating (reset) temperature of the bimetallic switch comprising the further control and would be held within a very close tolerance of that temperature. The operating temperature of the bimetallic switch could be arranged to be adjustable for enabling the water temperature at which the further control will operate to be adjusted within generally predetermined limits. Where less accurate control of the water temperature was acceptable, a simple thermal cut-out could be used in which the operation of the cut-out is purely through the action of sensed temperature rise and whose self-heating temperature rise due to through flow of the load current is insignificant; examples of such a device are the V10 or G6 switches manufactured by Otter Controls Ltd and utilizing a low resistance bimetallic actuator.

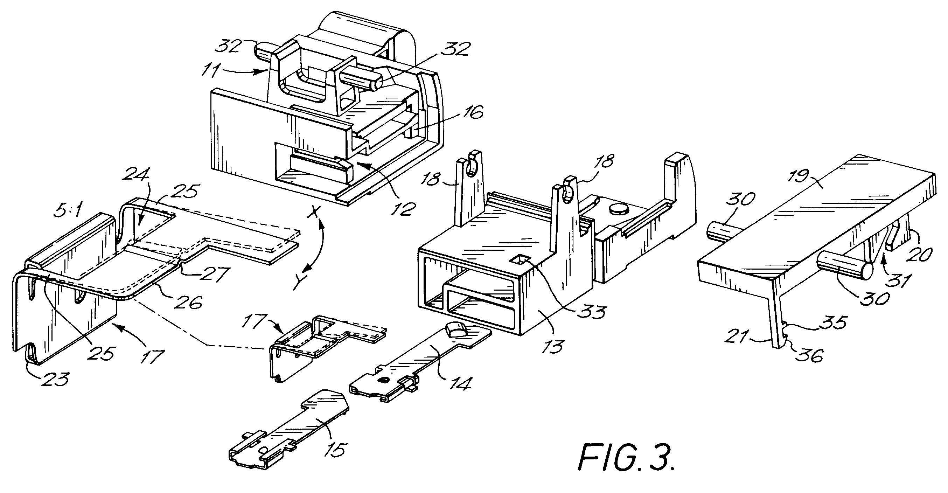

Referring now to Fig. 3 there is shown therein a modified form of the aforementioned J1 control described in GB 2212664, the modifications being such as to provide an additional switch which performs the functions of the switch 5 in Fig. 1, and to provide a manually-operable selector which cooperates with the trip lever of the J1 control and interacts furthermore with the additional switch. The manually-operable selector must accommodate the normal ON-OFF movements of the trip lever of the J1 steam control and additionally must be capable of opening and closing the additional switch. As is more particularly described in GB 2212664 with reference to Figs. 3A to 3M or Figs. 9A and 9B thereof, the J1 steam control basically comprises a main moulding 10 which defines spaced-apart abutments for a sprung over-centre switch-actuating movement comprising a trip lever 11 and a bimetal blade (which cannot be seen in the accompanying drawings). The trip lever 11 is pivotally mounted to one of the spaced-apart abutments at one end thereof and pivotally connected to one end of the bimetal at its opposite end, and the other end of the bimetal is in turn pivotally mounted to the other of the spaced-apart abutments, the trip lever and bimetal combination thus comprising a pivotal bridge between the two abutments which is movable between two stable positions on either side of an intermediate unstable position. The condition of the bridge is dependent upon the temperature of the bimetal. The main moulding 10 is formed with a chamber 12 adapted to accommodate a switch sub-assembly comprising an insulating moulding 13 and two contact-carrying leaf springs 14, 15 and, when the switch sub-assembly is received within its accommodating chamber a projection 16 formed on the trip lever 10 extends into the chamber 12 and cooperates with lower leaf spring 14 to determine the condition of the switch in accordance with the position of the trip lever as determined by the bimetal. As shown in Fig. 3 the insulating moulding 13 in the modified form of the J1 device further provides accommodation for a spring member 17 which cooperates with upper leaf spring 15 to define the additional switch 5 shown in Fig. 1, and is additionally formed with a pair of spaced-apart upstands 18 which define a pivotal mounting for a manually-operable selector 19 provided with a formation 20 which engages the trip lever 10 and a further formation 21 adapted to operate the additional switch defined by cooperation between spring member 17 and leaf spring 15.

As may be seen from the schematic circuit diagram of Fig 1, there is but a single connection between the further control 4 and the steam control 3, and the function of the additional switch 5 is to connect this connection to the opposite terminal of the further control 4. Thus it is necessary only to enable one of the switch terminals normally provided in the J1 control to be switchedly connected to the opposite terminal of the further control 4. This is achieved by provision of the further spring member 17 which has a portion 22 which cooperates with leaf spring 15 to define the additional switch 5 of Fig. 1 and further has a tab receptacle 23 for enabling connection of a conductor between the spring member 17 and the abovementioned opposite terminal of the further control 4.

The spring member 17, as best shown in the 5:1 enlarged view additionally provided in Fig. 3, is formed of spring metal and is arranged such that the portion 22 thereof is movable between two stable positions as indicated by the full and broken lines in the drawing. In the arrangement shown this is achieved by providing a cut-out 24 in the spring so as to define opposed links 25 bridged by a portion 26 and forming a crease 27 in the bridging portion 26 so as to draw together the ends of the limbs 25 which are spaced from the integrally-formed tab receptacle 23. In an alternative arrangement the spring member 17 could simply be dished so as to be movable between oppositely curved stable configurations. The portion 22 of the spring member 17 is preferably silver plated or plated with a silver alloy, advantageously a silver/antimony alloy as described in our British Patent Application No. 9202055.1, as likewise is the cooperating leaf spring 15 and it is not necessary to provide discrete silver switch contacts as are provided at the ends of the leaf springs 14, 15 since the switch defined by cooperation of the spring 17 with the leaf spring 15 is not normally required to break any current. The shape of the spring 17 is such that it will provide an adequate contact force upon the leaf spring 15 when in its contacts closed condition, and the selector 19 (hereinafter more particularly described) is preferably so arranged that the contacts between leaf springs 14, 15 are always made or broken before the contacts between spring member 17 and leaf spring 15.

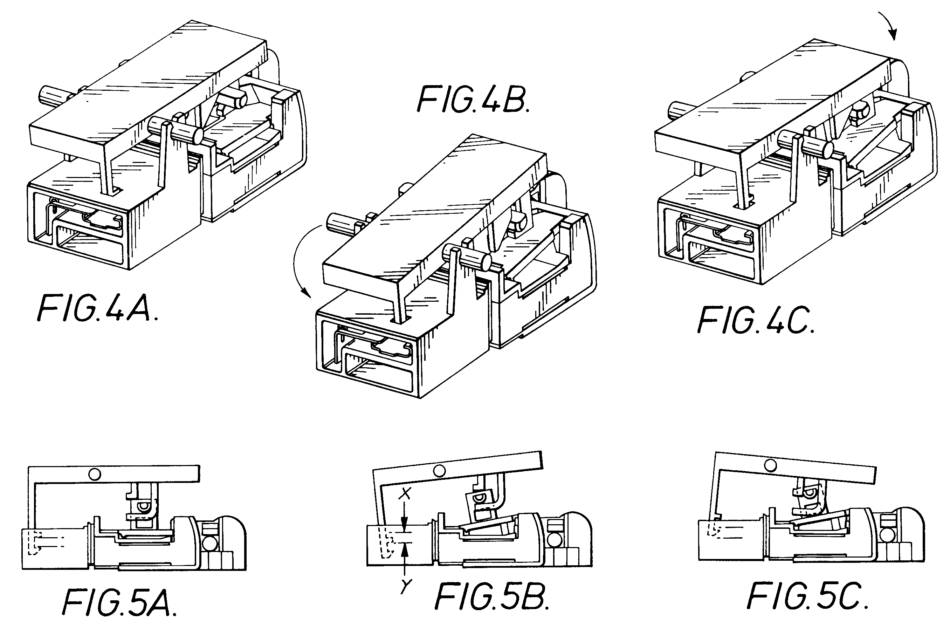

The selector 19, as shown in Fig. 3, comprises a manually-operable rocker having spigots 30 whereby it is pivotally mounted on the upstands 18 provided on the insulator moulding 13. Linkage to the trip lever 11 of the control is obtained by provision of a pair of spaced apart formations 20 depending from the underside of the selector 19, the formations 20 (only one of which can be seen in Fig 3) each having a cam slot 31 adapted to engage a respective one of a pair of spigots 32 formed on an upstand of the trip lever 11. A formation 21 at the opposite end of selector 19 projects through an aperture 33 formed in the upper surface of moulding 13 and has a pair of spaced apart projections 35, 36 which locate one on either side of the portion 22 of spring member 17 for moving the same between its two stable conditions. The selector 19, linked as described to both the bistable spring member 17 and the trip lever 11, is arranged to have three stable positions and is constrained in each of these positions by the action of the trip lever 11. As illustrated in Figs. 4A, 4B and 4C and in Figs 5A, 5B and 5C, the functions of these three positions are to provide a boiling position in which the switch defined by cooperation between the spring member 17 and leaf spring 15 is closed to render the further control 4 (Fig 1) inoperative, a hot water position in which the just mentioned switch is open so as to render the further control operative, and between these two positions an off position in which the switch defined by the leaf springs 14, 15 is open.

The linkage between the selector 19 and the bistable spring 17 that is provided by engagement of portion 22 of the spring between the projections 35, 36 on the formation 21 is with clearance or lost motion. This ensures that at each extreme of movement of the selector 19, ie from boiling to hot water or vice versa, one of the projections 35, 36 engages the bimetal spring 17 so as to move it from one of its stable configurations to the other. However, during intermediate travel of the selector 19, ie. hot water to off, or boiling to off, or vice versa, the bistable spring 17 lies within the clearance or lost motion provided by the spacing between the projections 35, 36 and the state of the spring 17 is unaffected by the movement of the selector. The linkage between the selector 19 and the trip lever 11 is such that movement of the selector from its central off position to either of its extreme positions, ie. boiling or hot water, causes the trip lever 11 to move to its on position. Similarly movement of the selector from either of its extreme positions to its central off position will cause the trip lever 11 to move to its off position. In addition, movement of the trip lever from its on position to its off position will cause the selector to move from either of its extreme positions to its central off position. This interactive linkage is achieved by means of the curved slotted cam parts 31 of the formations 20 formed on the selector 19 and their engagement with the spigots 32 on the trip lever upstand.

Figs. 4A, 4B and 4C illustrate the assembled form of the control shown in exploded view in Fig 3, and Figs 5A, 5B and 5C illustrate the range of movement X ...Y available to the bistable spring 17 and shows the positions of the projections 35, 36 in the three stable conditions of the selector 19.

The basic J1 steam control is capable only of automatic switching off and must be manually switched on (it can of course also be manually switched off). This means that in the described control, which is closely based upon the J1 steam control, the selector 19 may only be moved manually from its central, off position to either of its two extreme, on positions. Thus the force required to move the bistable spring member 17 between its two stable states, which only occurs at the extremes of motion of the selector, is provided manually. This is advantageous since it allows the proven J1 geometry to be used unchanged. The only forces required to be generated by the part of the described control which corresponds to the proven J1 are those for which the J1 steam control was designed, namely the force to operate its own switching contacts carried by leaf springs 14, 15 and to move a selector knob. The described control of Fig. 3 is simple and compact and is only a little larger than the known J1 steam control; it enables appliance manufacturers to be provided with a control system which will enable them to produce a range of appliances all using the same basic body but with increasing enhancement from a basic water boiling kettle to a combination appliance capable of selectively providing both boiling water and water at a lower temperature.

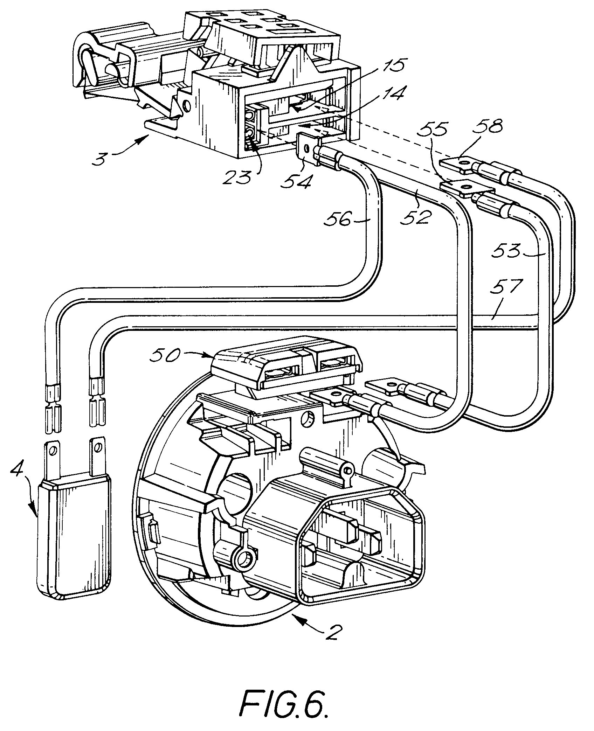

Fig. 6 is an illustrative showing of an arrangement as hereinbefore described with reference to Fig. 1 wherein the element protector 2 is constituted by an X1 control, the steam control 3 is constituted by a modified J1 control substantially as hereinbefore described, and the additional switch 4 is constituted by a G6 switch, the X1, J1 and G6 all being manufactured by Otter Controls Limited. In the arrangement shown the X1 is of the kind described with reference to Figs. 5C, D and E of GB 2212664 which is adapted to have a terminal portion of a J1 control plugged into a socket opening formed in the X1 housing so as to place the switch in the J1 in series with the switch provided in the X1 in the current supply path through the control. In the arrangement shown in Fig. 6 of the accompanying drawings a plug-in adaptor 50 is provided which plugs into the socket opening that is provided in the housing of the X1 control 2 and provides receptacles for a pair of male tabs at the ends of conductor wires 52 and 53 which have at their other ends male tabs 54 and 55 which connect, respectively, to the receptacle 23 provided on the spring member 17 that is provided in the modified J1 control 3 and to the receptacle formed at the end of lower spring terminal 14 of the modified J1 control, a further conductor wire 56 being coupled from male tab 54 to one terminal of the G6 switch 4, and yet another conductor wire 57 being coupled from the other terminal of the G6 switch to a male tab 58 which connects to the receptacle provided at the end of upper contact spring 15 of the J1 control. The modified J1 control 3 as shown in Fig. 6 has a different form of operating lever 19 but otherwise operates exactly as described hereinbefore with reference to Figs. 3, 4 and 5.

While the invention has been described herein with particular reference to a modification of the J1 steam control as manufactured by Otter Controls Ltd and as described in GB 2212664, the invention is not restricted to such modification and could well be embodied in other forms. More particularly, any steam sensor equipped with a manual operating feature could, at least in principle, be adapted to operate in accordance with the teachings of the present invention. Other modifications and variations are also possible, and will readily occur to those possessed of appropriate skills, without departure from the spirit and scope of the present invention.

## Claims

1. An electrical water heating appliance capable of selectively providing boiling water and water at a predetermined lower temperature comprises a first control responsive to water boiling in the appliance to switch off or reduce the supply of electrical heating energy to the appliance, a second control responsive to the temperature of water in the appliance reaching said predetermined lower temperature to switch off or reduce the supply of electrical heating energy to the appliance, and a manually operable selector for disabling the operation of the second control when it is desired to boil water in the appliance.

2. An appliance as claimed in claim 1 wherein the first and second controls comprise serially connected electrical switches and the manually operable selector comprises a third switch connected across the second control so as to short-circuit the same when the selector is operated to select the water boiling mode of the appliance, the arrangement being such that the electrical switch of the first control remains in circuit and serves a back-up function when the selector is operated to select the lower temperature mode of the appliance so as to switch off or reduce the supply of electrical heating energy to the appliance in the event of failure of the second control.

3. An appliance as claimed in claim 2 wherein the first control comprises a thermally responsive electrical switch comprising a thermally responsive switch actuator and first and second switch contacts arranged to be opened when said thermally responsive switch actuator responds to water boiling in the appliance, the third switch comprises a third switch contact provided in said thermally responsive electrical switch and arranged to co-operate with one of said first and second switch contacts, and said manually operable selector comprises a reset control for said thermally responsive electrical switch which furthermore determines the condition of said third switch.

4. An appliance as claimed in claim 3 wherein said thermally responsive electrical switch comprises a plastics moulding defining spaced-apart abutments which are bridged by a sprung overcentre arrangement comprising a bimetal and a trip lever and also defining a switch compartment within which there is mounted a switch sub-assembly arranged to be operated by the movements of the trip lever, the switch sub-assembly comprising said first and second switch contacts which are arranged to be open circuited when the bimetal responds to the generation of steam as a result of water boiling in the appliance and further comprising said third switch contact, and said manually operable selector comprises an actuator mounted on said switch moulding and interactively coupled with said trip lever so as to be capable of selectively determining the condition of said third switch contact whilst accommodating operating movements of said trip lever.

5. An appliance as claimed in any of the preceding claims wherein the second control comprises a thermally responsive bimetallic switch.

6. An appliance as claimed in any of claims 1 to 4 wherein the second control comprises a PTCR element.

7. An appliance as claimed in any of the preceding claims and further comprising a third control responsive to an overtemperature condition at an electrically powered heating element of the appliance to switch off the supply of electrical heating energy to the appliance.

8. An electrical switch for use in a water heating appliance for switching of the supply of electrical energy to a heating element of the appliance when water boils in the appliance, said switch comprising a thermally-responsive switch actuator, first and second switch terminals coupled to first and second switch contacts which are arranged to be made or broken in dependence upon the condition of said actuator, and a reset lever operable to reset the switch from its first and second contacts broken to its first and second contacts made condition, and said switch further comprising a third switch terminal coupled to a third switch contact which can make and break with said first switch contact irrespective of whether said first and second switch contacts are made or broken, and a manually operable selector interactively coupled to said reset lever and arranged selectively to make or to break electrical contact between said third and said first switch contacts, the arrangement being such that in use of the switch in a water heating appliance and with a further switch coupled between said first and third switch terminals and arranged to open its contacts at a water temperature below 100°C the appliance can selectively be operated either in a hot water mode or in a boiling mode by operation of said manually operable selector respectively to break or to make contact between said third and first electrical contacts.

9. A thermally responsive control adapted to switch off or reduce the supply of electrical energy to the heating element of a water heating appliance when water boils in the appliance, said control further comprising a manually-operable selector movable between "hot water" and "boiling water" positions and a switch coupled to said selector for bypassing a "hot water" sensor coupled to the control when the selector is in its "boiling water" position.

10. A thermally responsive control as claimed in claim 9 in combination with a "hot water" sensor coupled to the control, the "hot water" sensor being adapted to switch off or reduce the supply of electrical energy to the heating element of a water heating appliance when water is heated in the appliance to a predetermined temperature lower than the boiling temperature of water.

11. A thermally responsive control as claimed in claim 10 in combination further with an element protector adapted to switch off the supply of electrical energy to the heating element of the appliance in response to a sensed element overtemperature condition.

12. A water heating appliance provided with a control as claimed in any of claims 8 to 11.

13. A water heating appliance as claimed in claim 1 and substantially as herein described with reference to Fig. 1 or Fig. 2 or Fig. 6 of the accompanying drawings.

14. A thermally responsive control substantially as herein described with reference to Figs. 3, 4 and 5 of the accompanying drawings.

FIG.1.

FIG.2.

FIG.3.

EP 0 510 863 A2

FIG.4C.

FIG.4B.

FIG.4A.

FIG.5C.

FIG.5B.

FIG.5A.

11

FIG.6.